# EUROPÄISCHE PATENTANMELDUNG

(11) **EP 4 657 731 A1**
(43) Veröffentlichungstag der Anmeldung: **03.12.2025**
(21) Anmeldenummer: 25178707.3
(22) Anmeldetag: 26.05.2025
(51) Int. Cl.: H02M 1/00, H02M 3/07

(54) **LADUNGSPUMPE MIT TASTGRADGEREGELTER AUSGANGSSPANNUNG FÜR ANWENDUNG IN EINEM HEIZGERÄT**

(30) Priorität: 27.05.2024 DE 102024114763
(71) Anmelder: Vaillant GmbH, 42859 Remscheid NRW (DE)
(72) Erfinder: Schulte, Stephan, 42929 Wermelskirchen (DE)
(74) Vertreter: Popp, Carsten

(57) **Zusammenfassung**

Die Erfindung betrifft eine Schaltungsanordnung (12), dazu eingerichtet eine Eingangsspannung U_{E} auf eine vorgegebene Ausgangsspannung U_{A} zu erhöhen. Die Schaltungsanordnung (12) umfasst eine elektrische Ladungspumpe, dazu eingerichtet, mittels einer Schalteinrichtung (21) in einer Frequenz f alternierend in einem ersten Arbeitsschritt einen ersten Kondensator (16) mit der Eingangsspannung U_{E} zu laden und in einem zweiten Arbeitsschritt den ersten Kondensator (16) mit der Eingangsspannung U_{E} in Reihe zu schalten. Ein Mikrocontroller (20) ist dazu eingerichtet, die Schalteinrichtung (21) zu steuern und dabei innerhalb des ersten Arbeitsschrittes eine Kondensatorladezeit unabhängig von der Zeitdauer des ersten Arbeitsschrittes einzustellen, wobei die Kondensatorladezeit einen Tastgrad T als Verhältnis der Kondensatorladezeit bezogen auf eine Periode der Frequenz f angibt, und der Mikrocontroller (20) dazu eingerichtet ist, die Ausgangsspannung U_{A} durch eine Variation des Tastgrad Tes einzustellen.

## Beschreibung

Die Erfindung betrifft eine Schaltungsanordnung, ein Verfahren zum Betreiben der Schaltungsanordnung, ein Computerprogrammprodukt, ein Heizgerät, sowie eine Verwendung der Schaltungsanordnung.

Schaltungsanordnungen zur Erhöhung einer Eingangsspannung U_{E} auf eine vorgegebene Ausgangsspannung U_{A} sind in verschiedenen Ausgestaltungen aus dem Stand der Technik bekannt. Eingangsspannung U_{E} und Ausgangsspannung U_{A} können dabei insbesondere eine Gleichspannung sein. Häufig werden hierfür Aufwärtswandler eingesetzt.

In bestimmten technischen Bereichen kann die Nutzung eines Aufwärtswandlers jedoch problematisch sein, da bei einem Lastabwurf hohe Spannungen auftreten können. Häufig sind bei Haushaltsgeräten oder auch Gasgeräten Spannungen kleiner 50 Volt oder sogar kleiner 42 Volt vorgeschrieben. Nicht zuletzt könnten bei einem Lastabwurf zudem sicherheitsrelevante Schaltungsteile oder -komponenten beschädigt werden.

Insbesondere bei wasserstoffbetriebenen Heizgeräten kommen Temperatursensoren zum Einsatz, die eine Flammentemperatur erfassen und das Temperatursignal zur Verbrennungsregelung nutzen. So kann eine, bei der Verbrennung fossiler Brenngase regelmäßig eingesetzte, Ionisationsstrommessung der Wasserstoffflamme nicht robust erfolgen, da diese eine zu geringe Anzahl Ladungsträger bei der Verbrennung freisetzt. Eine Verbrennungsregelung bezeichnet hier insbesondere das Einstellen eines Verbrennungsluftverhältnisses in Abhängigkeit der Flammentemperatur als Verbrennungsparameter. Allerdings unterliegen hierfür geeignete Temperatursensoren Alterungserscheinungen, die einen Sensordrift bewirken können. Dem kann durch eine Kalibrierung des Temperatursensors begegnet werden. Für eine Kalibrierung kann der Temperatursensor mit einer Kalibrierspannung beaufschlagt werden. Nach dem Einstellen eines stationären Zustandes kann der Widerstand des Temperatursensors erfasst, mit einem Referenzwert verglichen und gegebenenfalls eine Korrekturfunktion bzw. ein Korrekturfaktor des Sensorsignals ermittelt werden. Die Kalibrierspannung ist dabei in der Regel größer einer Versorgungsspannung der Regelungselektronik des Heizgerätes, welche daher erhöht werden muss. Zur Erzeugung einer vorgegebenen Kalibierspannung ist ein Aufwärtswandler nur bedingt einsetzbar, da bei einem Lastabwurf zu hohe Spannungen entstehen können.

Zudem muss eine Schaltungsanordnung für diesen Anwendungsfall häufig hohen Bauraumanforderungen entsprechen und daher kompakt aufgebaut sein.

Aufgabe der vorliegenden Erfindung ist es, die mit Bezug auf den Stand der Technik geschilderten Probleme wenigstens teilweise zu lösen und insbesondere eine Schaltungsanordnung zur Erhöhung einer Eingangsspannung U_{E} auf eine vorgegebene Ausgangsspannung U_{A} die einfach und kompakt aufgebaut ist und ein unkritisches Verhalten bei einem Lastabwurf zeigt, insbesondere keine Spannungen oberhalb eines vorgegebenen Grenzwertes aufbaut.

Zudem soll die Erfindung die Komplexität eines Heizgerätes nicht wesentlich erhöhen.

Hierzu trägt eine Schaltungsanordnung bei, die dazu eingerichtet ist, eine Eingangsspannung U_{E} auf eine vorgegebene Ausgangsspannung U_{A} zu erhöhen. Die Schaltungsanordnung umfasst eine elektronische Ladungspumpe, die dazu eingerichtet ist, mittels einer Schalteinrichtung alternierend in einer Frequenz f in einem ersten Arbeitsschritt einen ersten Kondensator mit der Eingangsspannung U_{E} zu laden und in einem zweiten Arbeitsschritt den ersten Kondensator mit der Eingangsspannung U_{E} in Reihe zu schalten, wobei eine Steuerungseinrichtung dazu eingerichtet ist, die Ausgangsspannung U_{A} der Schaltungsanordnung mittels einer Variation eines Tastgrades T einzustellen, wobei der Tastgrad T das Verhältnis der Zeitdauer des ersten Arbeitsschrittes oder der Zeitdauer des zweiten Arbeitsschrittes bezogen auf eine Periode der Frequenz f angibt.

Eine Ladungspumpe bezeichnet hier eine Schaltung, bei der eine Spannungserhöhung durch eine Reihenschaltung einer Spannungsquelle mit einem auf die gleiche Spannung aufgeladenen Kondensator erreicht wird. Die Kapazität des Kondensators wird dabei auch als Pumpkapazität bezeichnet. Bei dem Betrieb einer Ladungspumpe kann man somit zwei Arbeitsschritte unterscheiden, in einem ersten Arbeitsschritt wird der Kondensator aufgeladen und in einem zweiten Arbeitsschritt der Kondensator in Reihe zur Spannungsquelle geschaltet, so dass eine gegenüber der Spannungsquelle erhöhte Spannung als Ausgangsspannung U_{A} zur Verfügung steht. Dabei versteht sich, dass Eingangsspannung U_{E} und Ausgangsspannung U_{A} eine Gleichspannung sind. Insofern kann die Ladungspumpe auch als DC/DC- Spannungswandler verstanden werden (DC- "direct current").

Der Ladungspumpe kann als Bestandteil der Schaltungsanordnung ein Filter nachgeordnet sein, der die Ausgangsspannung U_{A} glättet, also ein Ripple der Ausgangsspannung U_{A} mindert. Der Filter kann mindestens eine Induktivität umfassen. Bestandteil des Filters kann auch mindestens ein weiterer (zweiter) Kondensator zum Glätten der Ausgangsspannung sein.

Der Kondensator, der im ersten Arbeitsschritt aufgeladen wird, kann auch als erster Kondensator oder Pumpkondensator bezeichnet werden. Es kann im ersten Arbeitsschritt parallel zu dem ersten Kondensator ein zweiter Kondensator geladen werden. Eine Frequenz f der Ladungspumpe hat als Periode die Zeitdauer von erstem und zweitem Arbeitsschritt und gibt insofern die Anzahl der Wechsel der Arbeitsschritte der Ladungspumpe innerhalb eines vorgegebenen Zeitraumes an. Zudem kann dem ersten Kondensator und dem zweiten Kondensator jeweils eine Diode vorgeschaltet sein, die ein Entladen im unbeschalteten Zustand verhindert. Insofern kann die Ausgangsspannung U_{A} einer einstufigen Ladungspumpe maximal der doppelten Eingangsspannung entsprechen, wobei der Spannungsabfall der Dioden einzubeziehen ist. Diese Eigenschaft einer Ladungspumpe kann hier vorteilhaft im Falle eines Lastabwurfes auftretende Maximalspannungen begrenzen. Dabei versteht sich, dass eine Ladungspumpe auch mehrstufig aufgebaut sein kann und Vielfache der Eingangsspannung als maximale Ausgangsspannung bereitstellen kann. Eine hier vorgeschlagene Schaltungsanordnung kann auch eine mehrstufigen Ladungspumpe umfassen.

Die Steuerungseinrichtung steuert die Schalteinrichtung, die zwischen dem ersten Arbeitsschritt und dem zweiten Arbeitsschritt schaltend wechselt. Die Schalteinrichtung bewirkt somit im ersten Arbeitsschritt eine Parallelschaltung zwischen Spannungsquelle, bzw. der Eingangsspannung U_{E}, und dem ersten Kondensator und im zweiten Arbeitsschritt eine Reihenschaltung von Spannungsquelle, bzw. der Eingangsspannung U_{E}, und dem ersten Kondensator. Mit anderen Worten sind erster Kondensator und Spannungsquelle im ersten Arbeitsschritt parallel und im zweiten Arbeitsschritt in Reihe geschaltet. Hierzu kann ein zweiter Kondensator vorgesehen sein, der die Ausgangsspannung glättet. Der zweite Kondensator kann dabei eine Kapazität aufweisen, die größer der Kapazität des ersten Kondensators ist. Ein Tastgrad T gibt das Verhältnis der Zeitdauer des ersten Arbeitsschrittes, in dem der erste Kondensator geladen wird, oder der Zeitdauer des zweiten Arbeitsschrittes, in dem der erste Kondensator entladen wird, zu der Periode der Frequenz f an. Es wurde festgestellt, dass durch Variation des Tastgrades T der Ladungspumpe die Ausgangsspannung einstellbar ist. Die Steuerungseinrichtung ist dazu eingerichtet, durch Variation des Tastgrades T eine Ausgangspannung U_{A} der Ladungspumpe bzw. der Schaltungsanordnung einzustellen.

Insofern kann ein Aspekt der Erfindung darin erkannt werden, durch die Variation des Tastgrades T einer Ladungspumpe eine weitere Möglichkeit bereitzustellen, um eine Ausgangsspannung U_{A} der Ladungspumpe einzustellen oder auch zu regeln. Dies kann beispielsweise vorteilhaft sein, wenn die Frequenz f bzw. die Periode T anlagentechnisch vorgegeben ist. Die Variation des Tastgrads T erfordert in der Regel einen geringeren Programmieraufwand als eine Variation der Frequenz. Trotzdem können sowohl Frequenz als auch Tastgrad T in Kombination verändert werden, um den Modulationsbereich der Ladungspumpe zu erweitern. So können mittels einer Variation der Frequenz (insbesondere hoher Frequenzen) Anforderungen an erhöhte Ausgangsleistungen bei kleinen bzw. gleichgebliebenen Pumpkapazitäten (also einer geringen Kapazität des ersten Kondensators) verwirklicht werden. Dabei kann eine Feinreglung der Ausgangsspannung U_{A} mittels einer Variation des Tastgrades T erfolgen.

Die Steuerungseinrichtung kann dazu eingerichtet sein, die Ausgangsspannung U_{A} zu erfassen. Hierzu kann die Steuerungseinrichtung einen Spannungsabfall an einem elektrischen Widerstand über der Ausgangsspannung U_{A} erfassen. Anhand der erfassten Ausgangsspannung U_{A} kann diese von der Steuerungseinrichtung eingestellt bzw. insbesondere geregelt werden. Eine Regelung der Ausgangsspannung ermöglicht eine konstante, lastunabhängige Ausgangspannung U_{A} bereitzustellen.

Zur Variation des Tastgrades T kann die Steuerungseinrichtung zwei Schaltzustände der Schalteinrichtung schalten, die eine Durchführung des ersten und zweiten Arbeitschrittes der Ladungspumpe bewirken. Bei einem ersten Schaltzustand wird der erste Kondensator geladen, also mit der Eingangsspannung U_{E} parallel geschalten und somit der erste Arbeitsschritt durchgeführt. Bei einem zweiten Schaltzustand wird der erste Kondensator mit der Eingangsspannung U_{E} in Reihe geschaltet, so dass sich die Spannung des ersten Kondensators mit der Eingangsspannung U_{E} zur Ausgangsspannung U_{A} addiert, und somit der zweite Arbeitsschritt durchgeführt. Mittels des ersten und des zweiten Schaltzustandes und eines Zeitpunktes des Wechsels vom ersten zum zweiten Schaltzustand und umgekehrt kann die Steuerungseinrichtung einen Tastgrad T der Schaltungsanordnung einstellen bzw. variieren.

Dabei kann der Zeitraum, in dem der erste Schaltzustand der Schalteinrichtung geschaltet ist, auch als Kondensatorladezeit des ersten Kondensators verstanden werden, wobei der erste Kondensator häufig bereits vor einer Beendigung der Zeitdauer des ersten Schaltzustandes vollständig geladen ist. Die Frequenz f bestimmt eine Periode T, innerhalb derer erster Schaltzustand und zweiter Schaltzustand geschaltet werden.

Bei der Steuerungseinrichtung kann es sich beispielhaft um einen Mikrocontroller handeln, der dazu eingerichtet ist, ein Steuerungssignal zum Schalten der Schalteinrichtung zu generieren bzw. bereitzustellen. Bei dem Steuerungssignal kann es sich beispielsweise um ein pulsweitenmoduliertes Spannungssignal U_{S} handeln. Das Steuerungssignal kann ein Rechtecksignal sein, das zwischen einem ersten und einem zweiten Signalwert wechselt. Dabei kann ein erster Signalwert die Schalteinrichtung dazu veranlassen, den ersten Schaltzustand der Schalteinrichtung zu schalten, und ein zweiter Signalwert die Schalteinrichtung dazu veranlassen, den zweiten Schaltzustand zu schalten. Hierfür kann die Steuerungseinrichtung einen Prozessor und/ oder einen Speicher umfassen. Bei dem Speicher kann es sich beispielsweise um einen EEPROM (Electrically Erasable Programmable Read Only Memory) handeln. Die Steuerungseinrichtung kann eine anwendungsspezifische Schaltung (auch als ASIC (application-specified integrated circuit) bezeichnet) umfassen. Beispielhaft kann die Steuerungseinrichtung auch ein vorhandenes Steuergerät sein, beispielsweise ein Steuergerät eines Haushaltsgerätes oder eines Heizgerätes.

Gemäß einer Ausgestaltung kann die Schalteinrichtung eine Halbbrücke sein. Diese kann zwischen dem ersten Arbeitsschritt und dem zweiten Arbeitsschritt hin und zurück schalten. Dabei wird im ersten Arbeitsschritt mit einem ersten Schaltzustand der Schalteinrichtung der erste Kondensator geladen und im zweiten Arbeitsschritt mit einem zweiten Schaltzustand der Schalteinrichtung mit der Eingangsspannung U_{E} in Reihe geschalten und entladen. Um zwischen erstem und zweitem Schaltzustand bzw. erstem und zweitem Arbeitsschritt zu schalten kann die Halbbrücke zwei Transistoren umfassen, von denen jeweils ein Transistor den ersten und den zweiten Schaltzustand einschalten bzw. ausschalten kann. Um einen Kurzschluss während eines Schaltvorganges vom ersten zum zweiten Schaltzustand oder umgekehrt zu verhindern, kann dabei ein kurzer Zeitabstand zwischen dem Sperren eines ersten Transistors und dem Durchgangsschalten des zweiten Transistors vorgesehen sein, wodurch während eines Wechsels vom ersten zum zweiten Schaltzustand oder umgekehrt der erste Kondensator kurz stromlos geschalten wird.

Gemäß einer Ausgestaltung kann die Schalteinrichtung dazu eingerichtet sein, zusätzlich zu dem Tastgrad T die Frequenz f der Ladungspumpe zu variieren, um eine Ausgangsspannung einzustellen bzw. zu regeln.

Gemäß einer Ausgestaltung kann die Schalteinrichtung dazu eingerichtet sein, die Eingangsspannung U_{E} zu erfassen und Unregelmäßigkeiten derselben zu erkennen. Weiterführend kann die Schalteinrichtung dazu eingerichtet sein, die Schaltungsanordnung mittels der Schalteinrichtung abzuschalten, wenn eine Unregelmäßigkeit der Eingangsspannung U_{E} auftritt. Bei der Unregelmäßigkeit der Eingangsspannung U_{E} kann es sich insbesondere um ein Ansteigen derselben über einen vorgegebenen Grenzwert handeln. Das Abschalten der Schaltungsanordnung kann dabei ein Auftreten ungewollt hoher Spannungen oberhalb eines Grenzwertes verhindern und kann Beschädigungen der Schaltungsanordnung oder verbundener Bauteile vermeiden.

Die Schaltungsanordnung kann zur gezielten Erhöhung einer Eingangsspannung U_{E} auf eine vorgegebene Ausgangsspannung U_{A} genutzt werden. Insofern sind für die hier vorgeschlagene Schaltungsanordnung eine Vielzahl von Anwendungsfällen denkbar. Beispielhaft kann die Schaltungsanordnung zur Erhöhung einer Eingangsspannung, insbesondere einer Batteriespannung, eines Elektrowerkzeuges auf eine Arbeitsspannung eines Aktors (Elektromotors) eingesetzt werden. Beispielhaft kann eine hier vorgeschlagene Schaltungsanordnung auch für eine Spannungserhöhung zur Speisung von LED-Stromquellen unter anderem in portablen Leuchten genutzt werden. Dies kann eine Reihenschaltung von mehreren Batterie- oder Akkuzellen erübrigen. Des Weiteren können Verbraucher mit einer Nennspannung von 24V DC mit Hilfe der Ladungspumpe an ein 12V Versorgungnetz (z.B. eines Kraftfahrzeuges) angeschlossen werden.

Nach einem weiteren Aspekt der Erfindung wird ein Verfahren zum Betreiben einer hier vorgestellten Schaltungsanordnung vorgeschlagen. Die Schaltungsanordnung umfasst zumindest einen ersten Kondensator und eine Steuerungseinrichtung, die dazu eingerichtet ist, eine Schalteinrichtung zu steuern. Das Verfahren weist zumindest die nachfolgenden Schritte auf:
a) Schalten des ersten Kondensators mittels der Schalteinrichtung parallel zur Eingangsspannung U_{E} für einen ersten Arbeitsschritt und Laden des ersten Kondensators, und
b) Schalten des ersten Kondensators in Reihe zur Eingangsspannung U_{E} für einen zweiten Arbeitsschritt,
wobei die Schritte a) und b) innerhalb einer Periode der Frequenz f durchgeführt werden und die Steuerungseinrichtung die vorgegebene Ausgangsspannung U_{A} anhand eines Tastgrades T einstellt, wobei der Tastgrad T das Verhältnis der Zeitdauer des ersten Arbeitsschrittes oder der Zeitdauer des zweiten Arbeitsschrittes bezogen auf eine Periode der Frequenz f angibt.

Das Verfahren kann permanent während des Betreibens einer hier vorgeschlagenen Schaltungsanordnung durchgeführt werden. Dabei können die Schritte a) und b) bei einem regulären Verfahrensablauf mindestens einmal in der angegebenen Reihenfolge durchgeführt werden. Insbesondere können die Schritte a) und b) alternierend durchgeführt werden.

Gemäß einer Ausgestaltung kann die Steuerungseinrichtung den Tastgrad T und die Frequenz f variieren, um eine Ausgangsspannung U_{A} einzustellen.

Gemäß einer Ausgestaltung kann die Steuerungseinrichtung die Ausgangsspannung U_{A} erfassen und mittels der Variation des Tastgrades T die Ausgangsspannung U_{A} regeln. Bei der Regelung wäre somit der Tastgrad T und gegebenenfalls auch die Frequenz f Stellglied der Regelung und die Ausgangsspannung U_{A} die Regelgröße.

Gemäß einer Ausgestaltung kann die Steuerungseinrichtung einen Lastabwurf erkennen und in Folge die Schaltungsanordnung abschalten. Ein Lastabwurf kann beispielsweise durch einen Ausfall des mit der Ausgangsspannung versorgten Bauteils oder auch einen Kabelbruch einer Leitung zu diesem verursacht sein. Eine Detektion eines Lastabwurfs kann durch die Steuerungseinrichtung anhand der erfassten Ausgangsspannung erfolgen, also bei einem Anstieg (Gradienten) der Ausgangsspannung U_{A} größer einem Grenzwert. Bei einem Erkennen eines Lastabwurfes kann die Steuerungseinrichtung dazu eingerichtet sein, die Schaltungsanordnung bzw. die Ladungspumpe abzuschalten.

Gemäß einer Ausgestaltung kann die Steuerungseinrichtung die Eingangsspannung U_{E} erfassen und bei einer unregelmäßigen Eingangsspannung U_{E} die Schaltungsanordnung abschalten. Bei der Unregelmäßigkeit der Eingangsspannung U_{E} kann es sich insbesondere um ein Ansteigen derselben über einen vorgegebenen Grenzwert handeln. Das Abschalten der Schaltungsanordnung kann dabei ein Auftreten ungewollt hoher Spannungen oberhalb eines Grenzwertes verhindern und kann Beschädigungen der Schaltungsanordnung oder verbundener Bauteile vermeiden.

Ein Abschalten der Schaltungsanordnung kann beispielhaft erfolgen, indem die Steuerungseinrichtung den ersten Schaltzustand einnimmt, oder auch durch eine Abschaltung der Eingangsspannung U_{E}.

Nach einem weiteren Aspekt der Erfindung wird ein Computerprogrammprodukt vorgeschlagen, das bewirkt, dass eine hier vorgeschlagene Schaltungsanordnung ein hier vorgeschlagenes Verfahren ausführt. Das Computerprogrammprodukt kann insbesondere auf der Steuerungseinrichtung der Schaltungsanordnung durchgeführt werden und hierfür auf einem Speicher der Steuerungseinrichtung gespeichert sein. Beispielhaft kann die Steuerungseinrichtung auch ein Regel- und Steuergerät eines Heizgerätes sein. Auf dem Speicher der Steuerungseinrichtung können zudem Parameter hinterlegt werden oder sein, die zur Durchführung eins hier vorgeschlagenen Verfahrens notwendig sind.

Gemäß einem weiteren Aspekt der Erfindung wird eine Verwendung einer hier vorgeschlagenen Schaltungsanordnung zur Bereitstellung und Regelung einer Kalibrierspannung für einen Temperatursensor eines Heizgerätes vorgeschlagen.

Nach einem weiteren Aspekt wird auch ein Heizgerät, aufweisend eine hier vorgeschlagene Schaltungsanordnung, vorgestellt. Das Heizgerät kann insbesondere zur Heizung eines Gebäudes und/ oder zur Bereitstellung von erwärmtem Trink- oder Brauchwasser eingerichtet sein. Hierzu kann das Heizgerät ein Gasheizgerät mit einer Fördereinrichtung sein, die einen Massestrom Verbrennungsluft ansaugt. Dem angesaugten Massestrom Verbrennungsluft kann über ein Gasventil ein, einem vorgegebenen Verbrennungsluftverhältnis entsprechender, Massestrom Brenngas zugesetzt werden. Klarstellend soll an dieser Stelle angemerkt werden, dass das Heizgerät auch andere Oxidationsmittel als Verbrennungsluft nutzen kann. Das Verbrennungsgemisch aus Brenngas und Verbrennungsluft kann nunmehr über einen Gemischkanal einem, in einer Brennkammer angeordneten, Brenner zugeführt werden, in die Brennkammer austreten und verbrennen. Mit der Brennkammer kann mindestens ein Wärmetauscher thermisch gekoppelt sein, der die bei der Verbrennung entstehende Wärme auf einen Wärmeträger, beispielsweise Heizungswasser oder zu erwärmendes Trink- oder Brauchwasser, übertragen kann. Der mindestens eine Wärmetauscher kann dazu eingerichtet sein, die bei der Verbrennung entstehenden Abgase auf eine Temperatur unterhalb der Verdampfungstemperatur von Wasser abzukühlen und somit die dabei entstehende Kondensationswärme zu nutzen. Ein derartiges Heizgerät kann auch als Brennwertheizgerät bezeichnet werden. Die Abgase des Verbrennungsprozesses können dann über einen Abgaskanal des Heizgeräts einer Abgasanlage eines Gebäudes zugeführt werden. Das Heizgerät kann insbesondere ein wandhängendes Heizgerät sein.

Das Heizgerät kann zur Verbrennung von Wasserstoff oder eines Brenngases mit einem Wasserstoffanteil eingerichtet sein. Wasserstoff als Brennstoff ist aufgrund der Möglichkeit einer nachhaltigen Herstellung vorteilhaft und kommt zunehmend zur Anwendung. Der Wasserstoffanteil im Brenngas kann insbesondere mindestens 80 Prozent [%], mindestens 90 % oder insbesondere mindestens 95 % betragen.

Die Einstellung bzw. Regelung des Verbrennungsluftverhältnis wird dabei häufig als Verbrennungsregelung bezeichnet. Diese zieht zumeist einen Verbrennungsparameter ein, der von einer Flammenüberwachung erfasst werden kann. Bei Heizgeräten, die zur Verbrennung von fossilen, kohlenstoffhaltigen Brenngasen eingerichtet sind, umfasst die Flammenüberwachung in der Regel eine Ionisationselektrode, die einen Ionisationsstrom der Flamme als Verbrennungsparameter erfasst. Eine Wasserstoffflamme setzt jedoch nur eine geringe Menge Ladungsträger frei, so dass eine Verbrennungsregelung mit einem Ionisationsstrom als Verbrennungsparameter nicht robust möglich ist. Daher werden zur Flammenüberwachung einer Wasserstoffflamme andere Parameter herangezogen. Dies können eine Flammentemperatur oder auch eine von der Flamme emittierte ultraviolette Strahlung sein. Ein hier vorgeschlagenes Heizgerät weist einen Temperatursensor zur Flammenüberwachung auf. Bei dem Temperatursensor kann es sich um einen beliebigen widerstandsbasierten Temperatursensor handeln. Dabei versteht sich, dass der Temperatursensor für die hohen Flammentemperaturen, beispielsweise einer Wasserstoffflamme, geeignet sein muss.

Insbesondere kann der Temperatursensor ein Glühzünder sein, auch als HSI (Hot Surface Ignitor) bezeichnet. Ein Glühzünder ist dazu eingerichtet, mittels elektrischer Energie auf eine vorgegebene Temperatur, beispielsweise eine Zündtemperatur des Verbrennungsgemisches, erhitzt zu werden und kann somit als Zündeinrichtung des Heizgerätes wirken. Ein Glühzünder hat einen von der Temperatur abhängigen Widerstand aufzuweisen und kann somit auch als Temperatursensor betrachtet werden.

Ein widerstandsbasierter Temperatursensor weist in der Regel einen Sensordrift auf, also eine alterungsbedingte langsame Veränderung des Sensorsignals. Der Sensordrift kann eine unregelmäßige Verbrennungsregelung zu Folge haben, die kritisch Betriebszustände des Heizgerätes hervorrufen kann. Um dies zu vermeiden kann der Temperatursensor kalibriert werden. Hierzu wird der Temperatursensor mit einer vorgegebenen Kalibrierspannung beaufschlagt und nach dem Einstellen eines stationären Zustandes (unmittelbar im Anschluss) dessen ohmscher Widerstand erfasst/ gemessen und mit einem Referenzwiderstand verglichen. Gegebenenfalls kann eine Korrekturfunktion bzw. ein Korrekturfaktor ermittelt und implementiert werden, die eine Abweichung zwischen dem gemessenen ohmschen Widerstand und dem Referenzwert kompensiert.

Die Kalibrierspannung muss dabei eine ausreichend hohe Spannung sein, die eine vorgegebene Genauigkeit der Kalibrierung sicherstellt. Bei einem Glühzünder eines Heizgerätes hat sich hierfür eine Spannung von 30 Volt bis 50 Volt, insbesondere von 35 Volt bis 42 Volt, in vielen Fällen als ausreichend erwiesen. Häufig liegt eine Bordspannung eines Heizgerätes in einem Bereich zwischen 20 Volt und 30 Volt, so dass eine Schaltungsanordnung mit einer einstufigen Ladungspumpe eine ausreichende Spannungserhöhung für die Kalibrierspannung bewirken kann.

Eine geeignete Frequenz f kann in einem Bereich von 20 Kilohertz [KHz] bis 28 KHz, insbesondere von 25 KHz bis 26 KHz liegen. Dabei versteht sich, dass die Frequenz in Abhängigkeit der Pumpkapazität steht. Die Frequenz kann dabei derart gewählt werden, dass diese in einem für den Menschen akustisch nicht wahrnehmbaren Bereich liegt, und auch Vorgaben elektromagnetischer Verträglichkeit (EMV) entspricht.

Das Heizgerät kann ein Regel- und Steuergerät umfassen, dass zur Verbrennungsregelung eingerichtet ist und hierfür mit dem Temperatursensor zur Erfassung der Flammentemperatur des Heizgerätes datentechnisch in Verbindung steht. Das Regel- und Steuergerät des Heizgerätes kann auch zur Durchführung einer Kalibrierung des Temperatursensors eingerichtet sein. Das Regel- und Steuergerät kann auch der Mikrocontroller der Schaltungsanordnung sein, bzw. als solcher wirken.

Die im Zusammenhang mit der Schaltungsanordnung erörterten Details, Merkmale und vorteilhaften Ausgestaltungen können entsprechend auch bei dem hier vorgestellten Verfahren, dem Computerprogrammprodukt, dem Heizgerät sowie der Verwendung auftreten und umgekehrt. Insoweit wird auf die dortigen Ausführungen zur näheren Charakterisierung der Merkmale vollumfänglich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Hier werden somit eine Schaltungsanordnung, ein Verfahren zum Betreiben derselben, ein Computerprogrammprodukt, eine Verwendung sowie ein Heizgerät vorgeschlagen, welche die mit Bezug auf den Stand der Technik geschilderten Probleme zumindest teilweise lösen. Dabei ermöglicht die Schaltungsanordnung sowie das Verfahren eine gezielte Spannungserhöhung einer Eingangsspannung U_{E} auf eine vorgegebene Ausgangsspannung U_{A}. Das Heizgerät kann mittels der Schaltungsanordnung auf einfache und sichere Weise eine Kalibrierspannung für einen Temperatursensor erzeugen. Insbesondere ist sichergestellt, dass die Kalibrierspannung auch bei einem Lastabwurf nicht über einen Grenzwert ansteigt. Insofern kann auf einfache Weise auch eine dauerhaft robuste Verbrennungsregelung des Heizgerätes ermöglicht werden.

Zudem ist die Schaltungsanordnung einfach aufgebaut und ermöglich eine kompakte Bauweise und kann somit problemlos in ein Heizgerät mit geringem zur Verfügung stehenden Bauraum integriert werden.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine hier vorgeschlagene Schaltungsanordnung,
- Fig. 2:: ein hier vorgeschlagenes Heizgerät, und
- Fig. 3 und Fig. 4:: Parameterverläufe, die sich bei Durchführung eines hier vorgeschlagenen Verfahrens einstellen können.

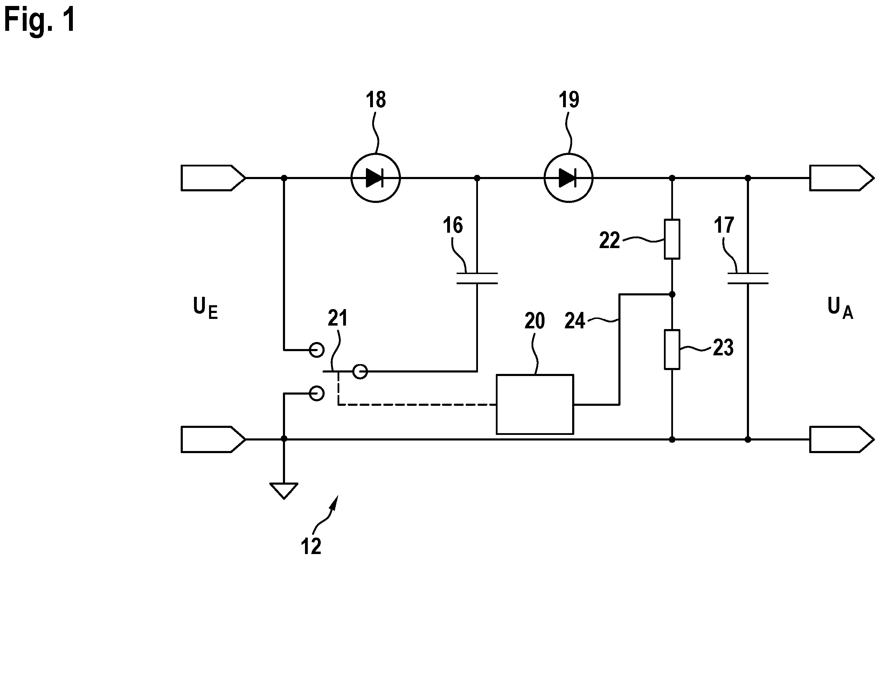

Fig. 1 zeigt beispielhaft und schematisch das Schaltbild einer hier vorgeschlagenen Schaltungsanordnung 12. Diese wird mit einer Eingangsspannung U_{E} versorgt und stellt eine Ausgangsspannung U_{A} bereit. Ein Mikrocontroller 20 ist dazu eingerichtet, eine Schalteinrichtung 21 zu steuern. Die Schalteinrichtung 21 kann einen ersten Schaltzustand annehmen, bei dem ein erster Kondensator 16 mit der Eingangsspannung U_{E} geladen wird. In einem zweiten Schaltzustand kann der erste Kondensator 16 von der Eingangsspannung U_{E} getrennt werden. In einem dritten Schaltzustand kann der erste Kondensator 16 in Reihe mit einem zweiten Kondensator 17 geschaltet werden, so dass sich deren Spannungen addieren. Zudem sind eine erste Diode 18 und eine zweite Diode 19 vorgesehen, die ein Entladen von erstem Kondensator 16 und zweitem Kondensator 17 durch Rückströme verhindern. Über einen ersten Widerstand 22 und einen zweiten Widerstand 23 kann der Mikrocontroller 20 ein Signal 24 der Ausgangsspannung U_{A} erfassen und diese Regeln.

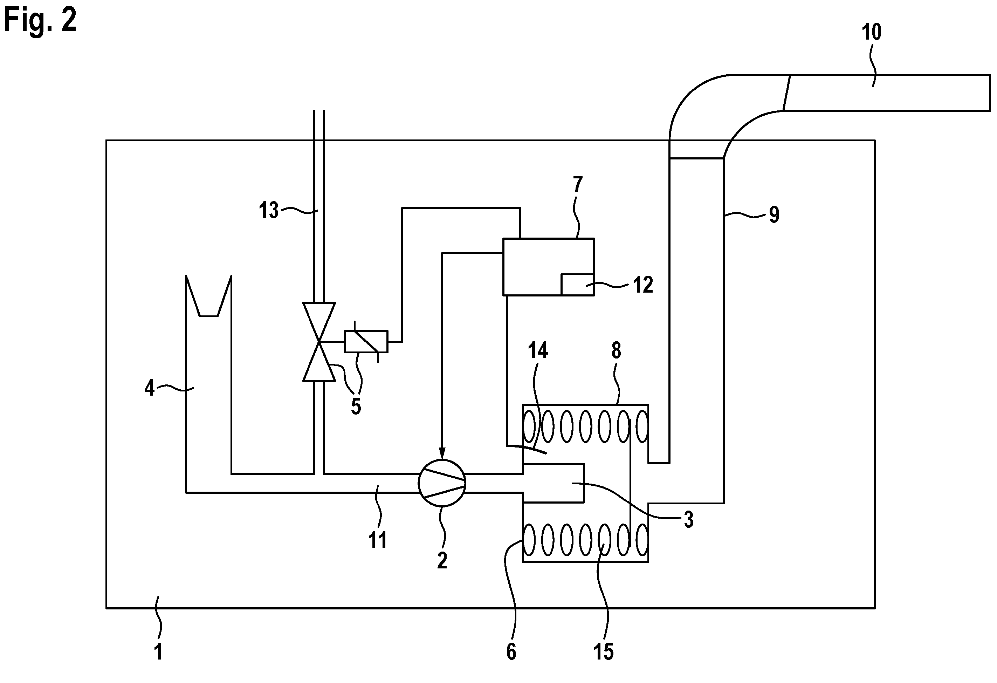

Fig. 2 zeigt beispielhaft und schematisch ein hier vorgeschlagenes Heizgerät 1. Dieses kann über eine Verbrennungsluftzuführung 4 Verbrennungsluft durch eine Fördereinrichtung 2 ansaugen und über ein Gasventil 5 ein, insbesondere wasserstoffhaltiges, Brenngas aus einer Gaszuführung 13 dem angesaugten Massestrom Verbrennungsluft zusetzen. Das Verbrennungsgemisch aus Brenngas und Verbrennungsluft kann nunmehr über einen Gemischkanal 11 einem, in einer Brennkammer 8 angeordneten, Brenner 3 zugeführt werden. Der Brenner 3 kann an einer Brennertür 6 befestigt sein und mit dem Gemischkanal 11 derart verbunden sein, dass Verbrennungsgemisch in einen Brennerhohlraum des Brenners 3 strömen kann. Anschließend kann das Verbrennungsgemisch aus dem Brenner 3 in die Brennkammer 8 austreten und verbrennen. An der Brennertür 6 kann zudem ein Temperatursensor 14 zum Erfassen einer Flammentemperatur am Brenner 3 angeordnet sein. An der Brennkammer 8 kann ein Wärmetauscher 15 angeordnet sein, der bei der Verbrennung entstehende Wärme auf einen Wärmeträger, beispielsweise Heizungswasser übertragen kann.

Die Verbrennungsprodukte können über ein Abgasrohr 9 aus der Brennkammer 8 einer Abgasleitung (Abgasanlage) 10 zugeführt werden. Das Heizgerät 1 kann zudem ein Regel- und Steuergerät 7 aufweisen, das zumindest mit dem Gasventil 5, der Fördereinrichtung 2, und dem Temperatursensor 14 datentechnisch verbunden sein kann. Das Regel- und Steuergerät 7 umfasst eine hier vorgeschlagene Schaltungsanordnung 12. Das Heizgerät 1 kann zur Verbrennung eines Brenngases enthaltend mindestens 80 % Wasserstoff eingerichtet sein.

Die Schaltungsanordnung 12 kann eine Kalibrierspannung für den Temperatursensor 14 bereitstellen. Für ein Kalibrieren des Temperatursensors 14 kann dieser zunächst auf eine vorgegebene Temperatur erhitzt werden. Hierfür kann der Temperatursensor 14 mit einer vorgegebenen Kalibrierspannung beaufschlagt werden. Nach Erreichen eines stationären Zustandes kann die Kalibrierspannung abgeschaltet werden und unmittelbar im Anschluss, also ohne zeitliche Verzögerung, der ohmsche Widerstand des Temperatursensors 14 ermittelt/ gemessen werden. Anhand eines Vergleichs des gemessenen Widerstandes mit einem Referenzwiderstand kann ein Sensordrift des Temperatursensors 14 bestimmt und mittels einer Korrekturfunktion kompensiert werden.

Die Kalibrierspannung kann dabei die Ausgangsspannung U_{A} einer hier vorgeschlagenen Schaltungsanordnung 12 sein. Die Eingangsspannung U_{E} kann die Versorgungsspannung des Heizgerätes 1 sein und beispielsweise 23 Volt betragen, die durch die Schaltungsanordnung 12 auf eine Kalibrierspannung von 38 V geregelt werden kann. Vorteilhaft ist die Ausgangsspannung U_{A} der Schaltungsanordnung 12 auf maximal das Zweifache der Eingangsspannung U_{E} begrenzt. So kann ein Auftreten hoher Spannungen im Heizgerät 1 und damit einhergehende Beschädigungen, beispielsweise des Regel- und Steuergerätes 7 vermieden werden.

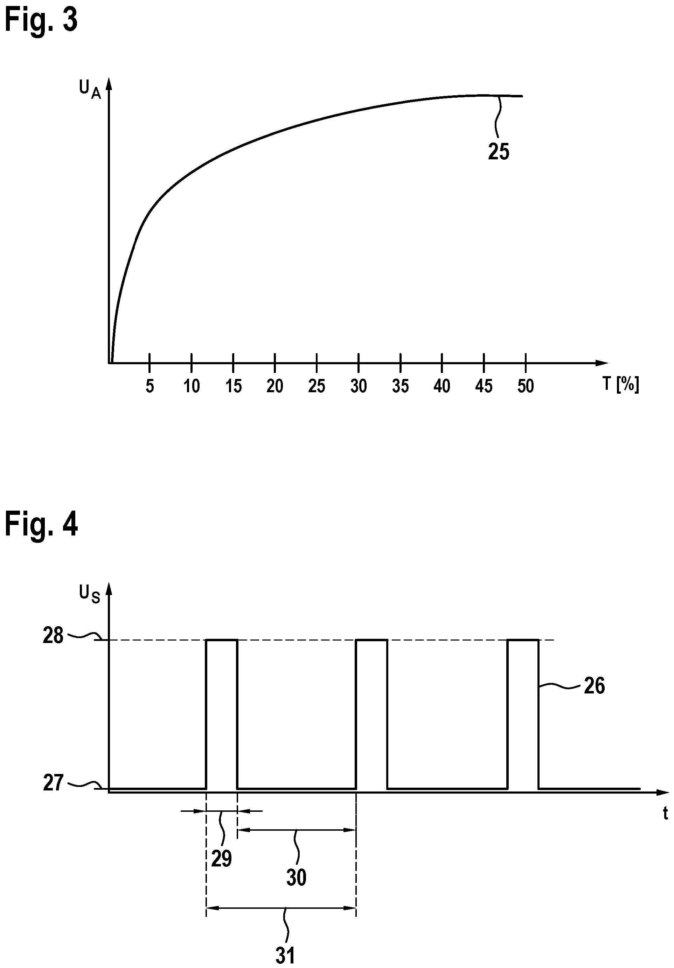

Fig. 3 und Fig. 4 zeigen beispielhaft Parameterverläufe, die sich bei Durchführung eines hier vorgeschlagenen Verfahrens auf einer hier vorgeschlagenen Schaltungsanordnung 12 einstellen können. Fig. 3 zeigt dabei eine Übertragungsfunktion 25, die eine Ausgangsspannung U_{A}, angegeben in Volt, in Abhängigkeit des Tastgrades T zeigt. Der Tastgrad T gibt hier eine Zeitdauer des zweiten Arbeitsschrittes, des Entladens des ersten Kondensators 16, bezogen auf eine Periode T 31 an und ist in Prozent angegeben.

Fig. 4 zeigt ein Steuerungssignal 26, hier ausgebildet als rechteckförmiges Spannungssignal U_{S}, angegeben in Volt, über der Zeit t. Somit kann das Steuerungssignal 26 auch als pulsweitenmoduliertes Signal verstanden werden, das zwischen einem ersten Signalwert 27 und einem zweiten Signalwert 28 wechselt, verstanden werden. Der erste Signalwert 27 veranlasst die Schalteinrichtung 21, den ersten Arbeitsschritt und damit den Schritt a) eines hier vorgeschlagenen Verfahrens durchzuführen und den ersten Kondensator 16 zu laden. Der zweite Signalwert 28 veranlasst die Schalteinrichtung 21 dazu den zweiten Arbeitsschritt durchzuführen und den ersten Kondensator 16 zu entladen. Die Zeitdauer von erstem Arbeitsschritt, geschaltet durch den ersten Signalwert 27, und dem zweiten Arbeitsschritt, geschaltet durch den zweiten Signalwert 28, kumuliert ergibt dabei die Periode T 31 der Frequenz f.

### Bezugszeichenliste

- 1: Heizgerät
- 2: Fördereinrichtung
- 3: Brenner
- 4: Verbrennungsluftzuführung
- 5: Gasventil
- 6: Brennertür
- 7: Regel- und Steuergerät
- 8: Brennkammer
- 9: Abgasrohr
- 10: Abgasanlage
- 11: Gemischkanal
- 12: Schaltungsanordnung
- 13: Gaszuführung
- 14: Temperatursensor
- 15: Wärmetauscher
- 16: erster Kondensator
- 17: zweiter Kondensator
- 18: erste Diode
- 19: zweite Diode
- 20: Mikrocontroller
- 21: Schalteinrichtung
- 22: erster Widerstand
- 23: zweiter Widerstand
- 24: Signal Ausgangsspannung
- 25: Übertragungsfunktion
- 26: Steuerungssignal
- 27: erster Signalwert
- 28: zweiter Signalwert
- 29: erster Arbeitsschritt
- 30: zweiter Arbeitsschritt
- 31: Periode

## Patentansprüche

1. Schaltungsanordnung (12), dazu eingerichtet eine Eingangsspannung U_{E} auf eine vorgegebene Ausgangsspannung U_{A} zu erhöhen, umfassend eine elektrische Ladungspumpe, dazu eingerichtet, mittels einer Schalteinrichtung (21) in einer Frequenz f alternierend in einem ersten Arbeitsschritt einen ersten Kondensator (16) mit der Eingangsspannung U_{E} zu laden und in einem zweiten Arbeitsschritt den ersten Kondensator (16) mit der Eingangsspannung U_{E} in Reihe zu schalten, wobei ein Mikrocontroller (20) dazu eingerichtet ist, die Ausgangsspannung U_{A} der Schaltungsanordnung (12) mittels einer Variation eines Tastgrad Tes einzustellen, wobei der Tastgrad T das Verhältnis der Kondensatorladezeit oder der Kondensatorentladezeit des ersten Kondensators (16) bezogen auf eine Periode der Frequenz f angibt.

2. Schaltungsanordnung (12) Anspruch 1, wobei die Schalteinrichtung (21) eine Halbbrücke ist.

3. Verfahren zum Betreiben einer Schaltungsanordnung (12) nach Anspruch 1 oder 2, wobei die Schaltungsanordnung (12) dazu eingerichtet ist, eine Eingangsspannung U_{E} auf eine vorgegebene Ausgangsspannung U_{A} zu erhöhen, und zumindest einen ersten Kondensator (16) und einen Mikrocontroller (20, der dazu eingerichtet ist, eine Schalteinrichtung (21) zu steuern, aufweist und das Verfahren zumindest die nachfolgenden Schritte umfasst:
a)Schalten des ersten Kondensators (16) mittels der Schalteinrichtung (21) parallel zur Eingangsspannung U_{E} und Laden des ersten Kondensators (16) für eine Kondensatorladezeit,
b)Schalten des ersten Kondensators (16) in Reihe zur Eingangsspannung U_{E},
wobei die Schritte a) und b) innerhalb einer Periode der Frequenz f durchgeführt werden und der Mikrocontroller (20) die vorgegebene Ausgangsspannung U_{A} anhand einer Variation eines Tastgrad Tes einstellt und der Tastgrad T das Verhältnis von Kondensatorladezeit oder der Kondensatorentladezeit zu der Periode der Frequenz f angibt.

4. Verfahren nach Anspruch 2, wobei der Mikrocontroller (20) mittels einer Variation des Tastgrad Tes und der Frequenz f die Ausgangsspannung U_{A} einstellt.

5. Verfahren nach einem der vorangehenden Ansprüche, wobei der Mikrocontroller (20) die Ausgangsspannung U_{A} erfasst und mittels der Variation des Tastgrad Tes f die Ausgangsspannung U_{A} regelt.

6. Verfahren nach einem der vorangehenden Ansprüche, wobei der Mikrocontroller (20) einen Lastabwurf erkennt und in Folge die Schaltungsanordnung (12) abschaltet.

7. Verfahren einem der vorangehenden Ansprüche, wobei der Mikrocontroller (20) die Eingangsspannung U_{E} erfasst und bei einer unregelmäßigen Eingangsspannung U_{E} die Schaltungsanordnung (12) abschaltet.

8. Computerprogrammprodukt umfassend Befehle, die bewirken, dass eine Schaltungsanordnung (12) nach Anspruch 1 ein Verfahren nach einem der Ansprüche 3 bis 7 ausführt.

9. Heizgerät (1) aufweisend einen Temperatursensor (14), dazu eingerichtet eine Flammentemperatur einer Flamme an einem Brenner (3) des Heizgerätes (1) zu erfassen, ein Regel- und Steuergerät (7), dazu eingerichtet die Verbrennung anhand der erfassten Flammentemperatur zu regeln und eine Schaltungsanordnung (12) nach Anspruch 1 oder 2 dazu eingerichtet, eine vorgegebene Kalibrierspannung für den Temperatursensor (14) bereitzustellen.

10. Heizgerät nach Anspruch 5, wobei der Temperatursensor (14) ein Glühzünder (HSI) ist.

11. Verwendung einer Schaltungsanordnung (12) nach einem der Ansprüche 1 bis 2, zur Bereitstellung einer Kalibrierspannung für einen Temperatursensor (14) eines Heizgerätes (1).
